Europäisches Patentamt

European Patent Office

Office européen des brevets

(11) Veröffentlichungsnummer: **0 239 562 B1**

# (12) EUROPÄISCHE PATENTSCHRIFT

(45) Veröffentlichungstag der Patentschrift: **05.02.92**

(21) Anmeldenummer: **87890049.7**

(22) Anmeldetag: **13.03.87**

(51) Int. Cl.⁵: **G11B 23/023**, G11B 33/04

(54) Einrichtung zum Lagern und raschen Entnehmen von Datenträgern.

(30) Priorität: **13.03.86 AT 665/86**

(43) Veröffentlichungstag der Anmeldung:
**30.09.87 Patentblatt 87/40**

(45) Bekanntmachung des Hinweises auf die
Patenterteilung:
**05.02.92 Patentblatt 92/06**

(84) Benannte Vertragsstaaten:
**AT CH DE FR GB IT LI NL**

(56) Entgegenhaltungen:
EP-A- 0 004 523     EP-A- 0 085 911
CA-A- 1 129 750     DE-A- 2 928 267
DE-A- 2 928 335     GB-A- 2 071 997
US-A- 4 330 161     US-A- 4 630 737

(73) Patentinhaber: **Franner KG**
**Römergasse 76**
**A-1170 Wien(AT)**

(72) Erfinder: **Franner, Stefan**
**Römergasse 76**
**A-1170 Wien(AT)**

(74) Vertreter: **Kretschmer, Adolf, Dipl.-Ing. et al**
**Patentanwälte Dipl.Ing. A. Kretschmer Dr.**
**Thomas M. Haffner Schottengasse 3a**
**A-1014 Wien(AT)**

Rank Xerox (UK) Business Services

## Beschreibung

Die Erfindung bezieht sich auf eine Einrichtung zum Lagern und raschen Entnehmen von EDV-Datenträgern, insbesondere Magnetbändern und Bandkassetten, mit einer zur Horizontalen von der Entnahmestelle weg abfallenden Stellfläche und zumindest zu einer Seite Begrenzungswänden zwischen benachbarten Datenträgern sowie einer Begrenzungswand an der der Entnahmestelle abgewandten Seite, wobei die Stellfläche für die Datenträger um eine senkrecht zur Einschubebene verlaufende Schwenkachse schwenkbar gelagert ist.

Aus der US-PS 4 330 161 ist eine Lagervorrichtung für Bandkassetten bekanntgeworden, bei welcher in einem Behälter Stellflächen für Bandkassetten um eine in dem Behälter quer zur Einschubrichtung verlaufende Schwenkachse schwenkbar gelagert sind.

Bei modernen Großrechenanlagen werden in der Regel als Massenspeicher magnetische Aufzeichnungen auf Datenträgern herangezogen und neben den voluminösen und in der Bedienung schwer handhabbaren Platteneinheiten für Plattenspeicher sind in erster Linie Disketten und Magnetbänder gebräuchlich. Für größere Rechenanlagen mit hoher Rechengeschwindigkeit sind bei modernen Einrichtungen Bandkassetten als Datenträger vorgesehen, wobei für die Verarbeitung einer großen Anzahl von Daten eine entsprechend große Anzahl von Bandkassetten bereitgehalten werden muß. Die auf den Bändern gespeicherten Daten müssen entsprechend gesichert werden und gegen unbefugten Zugriff in der Regel auch in entsprechenden feuerfesten Schränken versperrbar gelagert werden. Prinzipiell können derartige Datenträger aneinandergereiht aufgestellt werden, jedoch ist der Zugriff zu derartigen aneinandergereiht aufgestellten Datenträgern relativ aufwendig und zeitraubend. Bei modernen Großrechenanlagen kann es ohne weiteres vorkommen, daß während eines Arbeitstages bis zu 1000 Datenträger getauscht werden müssen. Wenn die Datenträger in Kassetten enthalten sind, welche nebeneinandergereiht aufgestellt sind, muß von der Bedienungsperson jede einzelne Kassette, die ergriffen werden soll, zunächst ein Stück vorgeschoben werden, bevor sie mit den Fingern einer Hand ergriffen werden kann. Auch das Herausschieben einer Kassette in eine Position, in welcher die Kassette mit den Fingern einer Hand ergriffen werden kann, gestaltet sich überaus zeitraubend und ist nicht reproduzierbar mit einer Handbewegung durchführbar. Um sicherzustellen, daß die Vorderkanten der Kassetten und damit die zumeist an diesen Vorderkanten angebrachten Beschriftungen in einer Ebene in der Lagerposition eingeschoben sind, ist es bekannt, die Stellfläche für derartige Datenträger geneigt auszubilden, so daß sie von der Vorderkante zur Hinterkante hin abfällt. Auf diese Weise wird jeweils eine definierte Einschublage sichergestellt, wobei jedoch auch bei diesen Ausführungen ein Verschieben der Kassette längs der Stellfläche zunächst erforderlich ist, bevor die Kassette mit den Fingern einer Hand ergriffen werden kann.

Die Erfindung zielt nun darauf ab, ausgehend von einer derartigen bekannten Einrichtung, eine Ausbildung zu schaffen, bei welcher mit einfachen Handbewegungen reproduzierbar eine rasche Entnahme von EDV-Datenträgern ermöglicht wird und mit welcher es möglich ist, eine Mehrzahl von Stellflächen in einfacher Weise aneinanderzureihen und sicher miteinander zu verbinden. Zur Lösung dieser Aufgabe besteht die erfindungsgemäße Einrichtung darin, daß die Schwenkachse in Fußteilen aufgenommen ist, daß jeder Fußteil eine kurze Schwenkachse trägt, deren freies Stirnende in eine fluchtende Bohrung eines Lagerteiles oder weiteren Fußteiles steckbar ist, und daß benachbarte Fußteile mit jeweils gesonderter kurzer Schwenkachse gegeneinander, insbesondere durch formschlüssige Verriegelungsglieder, in axialer Richtung unverschiebbar verriegelbar sind. Dadurch, daß jeder Fußteil eine kurze Schwenkachse trägt, deren freies Stirnende in eine fluchtende Bohrung eines Lagerteiles oder weiteren Fußteiles steckbar ist, kann aus einer Mehrzahl von gleichen Bauteilen eine beliebig kurze oder beliebig lange Reihe von Stellflächen entsprechend dem Platzangebot erstellt werden. Es entfällt somit ein Ablängen einer die Fußteile verbindenden Schwenkachse und die Verriegelung kann in einfacher Weise dadurch erzielt werden, daß jeweils einer der beiden benachbarten Teile eine Bohrung für die Aufnahme eines quer zur Längsachse der Schwenkachse verlaufenden Bolzens des anderen Teiles aufweist. Bei einer derartigen Ausgestaltung genügt es den benachbarten Fußteil in einer Schwenklage auf das freie Ende der vorangehenden Schwenkachse aufzustecken und durch Verschwenken um diese Schwenkachse den Verriegelungsbolzen in Eingriff in die Verriegelungsausnehmung des vorangehenden Fußteiles zu schwenken. Auf diese Weise werden die beiden Fußteile in axialer Richtung unverschiebbar verriegelt und es kann mit einer Mehrzahl von identischen Bauteilen eine beliebig lange Reihe von Stellflächen erstellt werden.

Da die Stellfläche quer zur Einschubrichtung schwenkbar angeordnet ist, ist es nicht erforderlich, an der zumeist nicht sehr griffigen Oberkante des Datenträgers durch Reibungsschluß eine Verschiebung zu bewirken, sondern es genügt, den Datenträger durch Verschwenken um diese Achse in eine Position zu bringen, in welcher er leicht mit der gleichen Hand, welche die Verschwenkung bewirkt, ergriffen werden kann. Der Schwenkweg ist hiebei reproduzierbar und die Datenträger gelangen unmittelbar in eine Position, in welcher sie in reproduzierbarer Weise und damit entsprechend rasch entnommen werden können, um in ein entsprechendes Peripheriegerät der Datenverarbeitungsanlage eingelegt zu werden.

Um die Schwenkbarkeit in keiner Weise zu behindern, kann mit Vorteil die Ausbildung so getroffen sein, daß die Fußteile in Richtung der Schwenkachse über eine der axialen Länge der Lagerteile entsprechende Länge ausgenommen oder abgesetzt ausgebildet sind. Im Bereich des Angriffes des Lagerteils der Stellfläche sind somit die Fußteile freigestellt, so daß eine Verschwenkung um beliebige vorgegebene Winkel möglich ist.

In vorteilhafter Weise ist die erfindungsgemäße Ausbildung so getroffen, daß die Schwenkachse von einem mit der Stellfläche verbundenen, insbesondere einstückig mit dieser ausgebildeten, Lagerteil teilweise umgriffen wird. Prinzipiell ist es möglich, an der Unterseite der Stellfläche ein Lagerauge vorzusehen, welches von der Schwenkachse durchsetzt ist.

Da der Einbau derartiger Einrichtungen in der Regel in Metallschränken, insbesondere feuergeschützten Metallschränken, erfolgt, ergibt sich durch Verschwenken der Teile nach hinten, bei Fertigung der Stellflächen sowie der Wandteile aus Kunststoff, ein relativ großer Geräuschpegel, welcher dadurch verringert werden kann, daß das der Schwenkachse abgewandte Ende der Stellflächen an seiner Unterseite mit Dämpfungselementen, insbesondere Platten aus elastomerem Material, ausgestattet ist.

Mit der erfindungsgemäßen Einrichtung soll es vor allen Dingen möglich sein, eine große Anzahl von Datenträgern übersichtlich nebeneinander anzuordnen und leicht zugreifbar zu lagern. Die entsprechende Anzahl von gleichartigen Datenträgern kann dadurch übersichtlich geordnet und gelagert werden, daß die Fußteile mit einer damit zusammenwirkenden Schiene zu einer Mehrfacheinheit zusammensetzbar sind. Durch die Anordnung der Fußteile, mit einer damit zusammenwirkenden Schiene läßt sich eine entsprechend der zur Verfügung stehenden Stellänge beliebige Anzahl von Stellflächen seitlich aneinanderreihen.

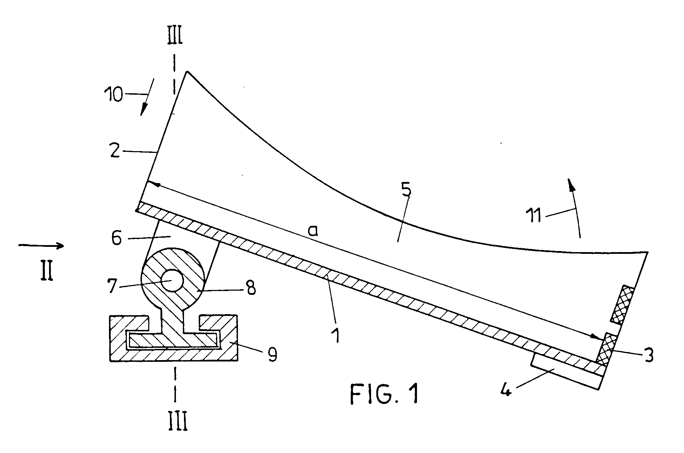

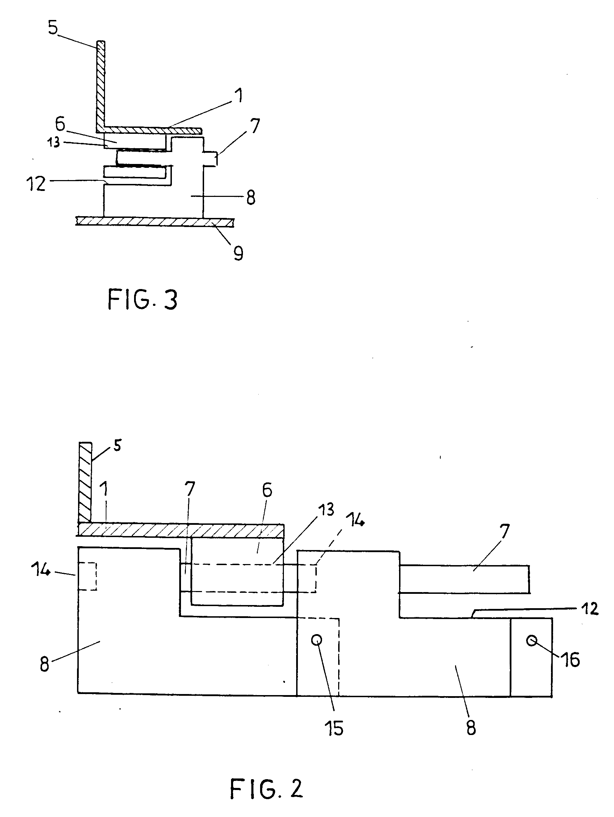

Die Erfindung wird nachfolgend an Hand von in der Zeichnung dargestellten Ausführungsbeispielen näher erläutert. In dieser zeigen: Fig. 1 eine Seitenansicht auf eine erfindungsgemäße Einrichtung, teilweise im Schnitt; Fig. 2 eine Ansicht auf eine Mehrzahl von Einrichtungen nach Fig. 1, im Sinne des Pfeiles II der Fig. 1 und Fig.3 einen Schnitt nach der Linie III-III durch eine abgewandelte Ausführungsform.

In Fig. 1 ist eine Stellfläche 1 für Datenträger dargestellt, welche in der gezeigten Position, welche der Ruhelage entspricht, von der Entnahmestelle 2 in Richtung zur hinteren Begrenzungswand 3 abfällt. Nahe der hinteren Begrenzungswand 3 sind Dämpfungsplatten 4 aus elastomerem Material vorgesehen, welche in der Einbaulage, beispielsweise an einem Regalbrett oder einem Tisch, anliegen. Die Stellfläche 1 ist durch seitliche Begrenzungswände 5 begrenzt, wobei jede Stellfläche 1 lediglich eine derartige Seitenwand 5 aufweisen muß, um Platz zu sparen.

Nahe der Vorderkante bzw. der Entnahmeöffnung 2 ist die Stellfläche 1 mit einem Lagerauge 6 versehen, welches von einer Schwenkachse 7 durchsetzt ist. Die Schwenkachse 7 ist hiebei in einem geschnitten dargestellten Fußteil 8 aufgenommen, welcher selbst wiederum in einer Montageschiene 9 verschieblich oder in der entsprechenden Position festgelegt gehalten ist.

Die Stellfläche 1 erstreckt sich hiebei über eine Länge a, welche geringer ist als die Länge der Unterkante eines, nicht dargestellten, Datenträgers, so daß durch Druck im Sinne des Pfeiles 10 auf die Vorderkante des Datenträgers unmittelbar ein Verschwenken der Stellfläche 1 im Sinne des Pfeiles 11 erfolgt. Der Datenträger gelangt hiebei in eine Position, in welcher er mit der gleichen Hand, welche den Druck in Richtung des Pfeiles 10 ausgeübt hat, ergriffen werden kann, wobei die Stellfläche 1 unmittelbar anschließend wieder in ihre in Fig. 1 dargestellte Position zurückschwenkt, wenn sie vom Datenträger entlastet ist.

In Fig. 2 sind zwei Fußteile 8 dargestellt, welche jeweils eine gesonderte kurze Schwenkachse 7 tragen. Die kurze Schwenkachse 7 erstreckt sich im wesentlichen über die Länge eines Fußteiles und ist so bemessen, daß das freie Ende in eine fluchtende Bohrung 14 des benachbarten Fußteiles einsteckbar ist. Durch die Ausnehmung 12 im Fußteil 8 wird eine große Verschwenkbarkeit sichergestellt, welche erforderlichenfalls durch nicht dargestellte Begrenzungsanschläge begrenzt sein kann. Mit 13 ist die Aufnahmebohrung im Lagerteil 6 der Stellfläche angedeutet. Um eine axiale Verschiebung des benachbarten Fußteiles 8 gegenüber dem vorangehenden Fußteil 8 zu verhindern, kann der benachbarte Fußteil einen Bolzen 15 aufweisen, welcher sich in der Verriegelungslage in eine Ausnehmung 16 des Fußteiles 8 erstreckt. Beim Aufstecken wird somit der benachbarte Fußteil 8 zunächst in einer Schwenklage auf die vorangehende Schwenkachse 7 aufgesteckt und durch Verschwenken gelangt der Bolzen 15 dieses benachbarten Fußteiles 8 in Verriegelungseingriff mit der Ausnehmung 16 des vorangehenden Fußteiles 8.

In Fig.3 ist eine abgewandelte Ausführungsform dargestellt, wobei die Bezugzeichen beibehalten wurden. Bei dieser Ausbildung weist der Fußteil 8 wiederum eine kurze Schwenkachse auf, wobei der den Lagerteil 6 durchsetzende Teil der Schwenkachse 7 kürzer als die axiale Länge des Lagerteiles 6 ausgebildet ist. Der Fußteil 8 weist an seiner dem Lagerteil 6 abgewandten Seite nunmehr einen zweiten Teil einer kurzen Schwenkachse auf, welcher beim Zusammensetzen mehrerer Fußteile 8 und Stellflächen 1 mit Lagerteilen 6 in die Bohrung 13 des Lagerteiles 6 eingreift. Die Verriegelung benachbarter Fußteile erfolgt, wie dies in Fig.2 beschrieben wurde, über eine Verriegelung eines Bolzens in einer Ausnehmung.

## Patentansprüche

1. Einrichtung zum Lagern und raschen Entnehmen von EDV-Datenträgern, insbesondere Magnetbändern und Bandkassetten, mit einer zur Horizontalen von der Entnahmestelle (2) weg abfallenden Stellfläche (1) und zumindest zu einer Seite Begrenzungswänden (5) zwischen benachbarten Datenträgern sowie einer Begrenzungswand an der der Entnahmestelle abgewandten Seite, wobei die Stellfläche (1) für die Datenträger um eine senkrecht zur Einschubebene verlaufende Schwenkachse (7) schwenkbar gelagert ist, dadurch gekennzeichnet, daß die Schwenkachse (7) in Fußteilen (8) aufgenommen ist, daß jeder Fußteil (8) eine kurze Schwenkachse (7) trägt, deren freies Stirnende in eine fluchtende Bohrung (14) eines Lagerteiles oder weiteren Fußteiles steckbar ist, und daß benachbarte Fußteile mit jeweils gesonderter kurzer Schwenkachse gegeneinander, insbesondere durch formschlüssige Verriegelungsglieder (15), in axialer Richtung unverschiebbar verriegelbar sind.

2. Einrichtung nach Ansprch 1, dadurch gekennzeichnet, daß die Fußteile (8) in Richtung der Schwenkachse (7) über eine der axialen Länge der Lagerteile (6) entsprechende Länge ausgenommen oder abgesetzt ausgebildet sind.

3. Einrichtung nach Anspruch 1 oder 2, dadurch gekennzeichnet, daß die Schwenkachse (7) von einem mit der Stellfläche (1) verbundenen, insbesondere einstückig mit dieser ausgebildeten, Lagerteil (6) zumindest teilweise umgriffen wird.

4. Einrichtung nach Anspruch 1, 2 oder 3, dadurch gekennzeichnet, daß das der Schwenkachse (7) abgewandte Ende (3) der Stellfläche (1) an seiner Unterseite mit Dämpfungselementen (4), insbesondere Platten aus elastomerem Material, ausgestattet ist.

5. Einrichtung nach einem der Ansprüche 1 bis 4, dadurch gekennzeichnet, daß die Fußteile (8) mit einer damit zusammenwirkenden Schiene (9) zu einer Mehrfacheinheit zusammensetzbar sind.

## Claims

1. Device for the mounting and quick removal of recording media for electronic data processing, in particular magnetic tapes and tape cassettes, with a positioning surface (1) sloping down from the point of removal (2) at an angle to the horizontal and, at least on one side, boundary walls (5) between adjacent recording media as well as a boundary wall on the side facing away from the point of removal, wherein the positioning surface (1) for the recording media is mounted pivotably about a pivot shaft (7) extending perpendicularly to the plane of insertion, characterised in that the pivot shaft (7) is held in base portions (8), that each base portion (8) carries a short pivot shaft (7) the free end of which can be fitted in an aligned bore (14) of a mounting portion and/or additional base portion, and that adjacent base portions each with a separate short pivot shaft can be locked non-displaceably in the axial direction relative to each other, in particular by form-fitting locking members (15).

2. Device according to claim 1, characterised in that the base portions (8) are designed to be removed or deposited in the direction of the pivot shaft (7) over a length corresponding to the axial length of the mounting portions (6).

3. Device according to claim 1 or 2, characterised in that the pivot shaft (7) is at least partially encompassed by a mounting portion (6) connected to the positioning surface (1), and in particular constructed in one piece therewith.

4. Device according to claim 1, 2 or 3, characterised in that the end (3) of the positioning surface (1) facing away from the pivot shaft (7) is provided on its lower side with damping elements (4), in particular sheets of elastomeric material.

5. Device according to any of claims 1 to 4, characterised in that the base portions (8) can be assembled with a rail (9) cooperating therewith to form a multiple unit.

## Revendications

1. Dispositif pour le stockage et le prélèvement rapide de supports de données informatiques, en particulier de bandes magnétiques et de cassettes de bandes magnétiques, comportant une surface de positionnement (1), inclinée par rapport à l'horizontale à l'opposé de l'emplacement de prélèvement (2) et, au moins sur un côté, des parois de délimitation (5) entre des supporte de données voisins, ainsi qu'une paroi de délimitation sur le côté opposé à l'emplacement de prélèvement, la surface de positionnement (1) pour les supports de données étant montée à pivotement autour d'un axe de pivotement (7) s'étendant perpendiculairement au plan d'insertion, caractérisé par le fait que l'axe de pivotement (7) est contenu dans des éléments de base (8), que chaque élément de base (8) porte un court axe de pivotement (7), dont l'extrémité avant libre est enfichable dans un alésage (14) en alignement précis d'un élément de palier ou d'un autre élément de base, et que des éléments de base voisins sont verrouillables de façon fixe dans la direction axiale avec les courts axes de pivotement séparés respectifs l'un contre l'autre, en particulier par des éléments de verrouillage (15) à engagement positif.

2. Dispositif selon la revendication 1, caractérisé par le fait que les éléments de base (8) sont réalisés avec une forme creuse ou évidée dans la direction de l'axe de pivotement (7) sur une longueur correspondant à la longueur axiale des éléments de palier (6).

3. Dispositif selon l'une des revendications 1 ou 2, caractérisé par le fait que l'axe de pivotement (7) est enveloppé au moins en partie par un élément de palier (6) relié à la surface de positionnement (1), en particulier réalisé d'un seul tenant avec elle.

4. Dispositif selon l'une des revendications 1, 2 ou 3, caractérisé par le fait que l'extrémité (3) de la surface de positionnement (1), opposée à l'axe de pivotement (7), est munie, sur sa face inférieure, d'éléments d'amortissement (4), en particulier de plaques en matière élastomère.

5. Dispositif selon l'une des revendications 1 à 4, caractérisé par le fait que les éléments de base (8) peuvent être assemblés en un ensemble modulaire par une barre (9) coopérant avec eux.

FIG. 1

FIG. 3

FIG. 2